(19) Europäisches Patentamt
European Patent Office
Office européen des brevets

(11) Veröffentlichungsnummer: **0 008 019**
**A1**

(12) **EUROPÄISCHE PATENTANMELDUNG**

(21) Anmeldenummer: **79102471.4**

(22) Anmeldetag: **16.07.79**

(51) Int. Cl.³: **C 08 L 11/00**, C 08 L 21/00, C 08 K 5/34, C 08 K 5/46

(30) Priorität: **27.07.78 DE 2832910**

(43) Veröffentlichungstag der Anmeldung: **20.02.80 Patentblatt 80/4**

(84) Benannte Vertragsstaaten: **BE DE FR GB IT NL**

(71) Anmelder: **BAYER Aktiengesellschaft, Zentralbereich Patente,Marken und Lizenzen Bayerwerk, D-5090 Leverkusen 1 (DE)**

(72) Erfinder: **Behr, Sigurd, Knipprather Strasse 76, D-4019 Monheim/Rhein (DE)**

(54) **Verfahren zur Vernetzung von Polymeren mit aktivem Halogen und die erhaltenen Produkte.**

(57) Verfahren zur Vernetzung von Polymeren mit aktivem Halogen, wobei als Vernetzungsmittel Verbindungen der Formeln

(1)

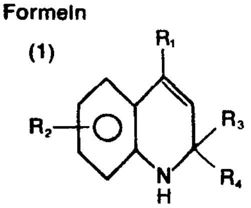

, oder dessen Oligomere

(2)

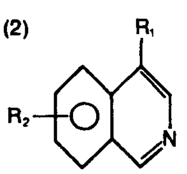

,

(2a)

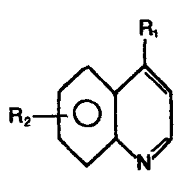

,

(3)

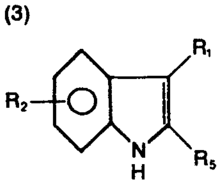

,

(4)

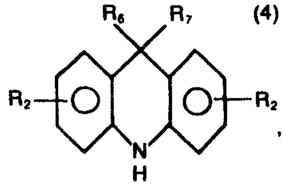

,

(5)

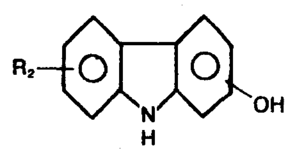

,

(6)

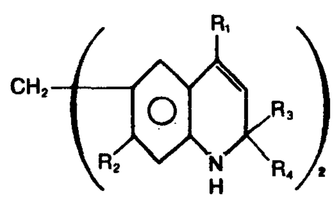

,

(7)

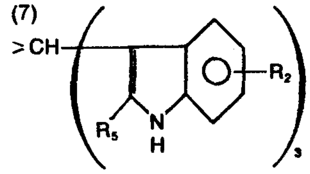

,

(8)

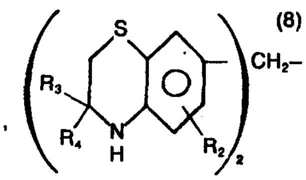

eingesetzt werden.

EP 0 008 019 A1

BAYER AG
Zentralbereich
Patente, Marken und Lizenzen

509 Leverkusen-Bayerwerk

Verfahren zur Vernetzung von Polymeren mit aktivem Halogen

BEZEICHNUNG GEÄNDERT siehe Titelseite

Die Erfindung betrifft ein Verfahren zur Vernetzung von Polymeren mit aktivem Halogen unter Verwendung bestimmter Produkte, die die Verarbeitungssicherheit der Polymere erhöhen, und bei denen keine Verlängerung der Ausvulkanisationszeit auftritt.

Die bisher bekannt gewordenen Vernetzungsmittel beispielsweise für Polychloropren weisen den Nachteil auf, daß die Vernetzung nach Beendigung der Hauptreaktion mit verminderter Geschwindigkeit weiter abläuft. Dies ist aus den entsprechenden Vulkameterkurven ersichtlich. Von einer Nachvernetzung kann dann nicht mehr gesprochen werden, wenn nach Beendigung der Hauptvernetzung die Vulkameterkurve parallel zur Zeitachse verläuft. Steigt jedoch die Kurve weiterhin an, liegt eine Nachvernetzung vor. Als Maß für eine solche Nachvernetzung kann die Zeitdifferenz zwischen 90 %iger und 80 %iger Ausvulkanisation angesehen werden ($T_{90}-T_{80}$). Ist diese Differenz klein, erfolgt nur geringe Nachvernetzung.

Technologisch bedeutet die Nachvernetzung, daß großvolumige Vulkanisate über den gesamten Querschnitt verteilt keinen einheitlichen Vernetzungsgrad bzw. Modul aufweisen. Dies wirkt sich u.a. ungünstig bei dynamischer Beanspruchung aus.

Weiterhin bewirken die bekannten Vernetzer in beispielsweise Polychloropren eine schnell beginnende aber langsam ablaufende Vernetzungsreaktion. Dies kann ebenfalls den Vulkameter-

kurven entnommen werden. Die Inkubationszeit (die erforderliche Zeit zur Erreichung einer 10 %igen Ausvulkanisation) ist kurz und die Ausheizzeit (die erforderliche Zeit zur Erreichung einer 80 %igen Ausvulkanisation) ist lang, d.h. der Anstieg der Vulkameterkurve beginnt früh und ist relativ flach. Bei einer solchen Vernetzungsreaktion ist der Quotient $T_{10}/T_{80}$ klein. Technologisch bedeutet dies eine geringe Verarbeitungssicherheit.

Es wurde nun gefunden, daß bei Verwendung von bestimmten Produkten Vernetzung mit der Hauptreaktion praktisch beendet ist und bei weiterer Temperatureinwirkung keine Nachvernetzung mehr eintritt. Weiterhin konnte festgestellt werden, daß der Quotient $T_{10}/T_{80}$ wesentlich größer ist als bei Verwendung des z.B. gebräuchlichen Vernetzers Thioharnstoff. Weiterhin ist die Inkubationszeit ($T_{10}$) überraschend länger. Ferner konnte festgestellt werden, daß mit den erfindungsgemäß eingesetzten Verbindungen gegenüber einer mittels Thioharnstoff durchgeführten Vernetzung ein verbessertes Verhalten in der dynamischen Biegebeanspruchung vorliegt.

Die Erfindung betrifft somit ein Verfahren zur Vernetzung von Polymeren mit aktivem Halogen, das dadurch gekennzeichnet ist, daß als Vernetzungsmittel Verbindungen der Formeln

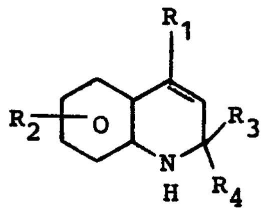, oder dessen Oligomere

(1)

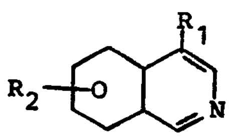,

(2)

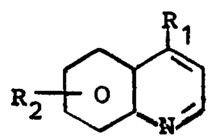

(2 a)

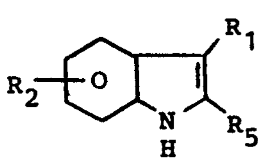,

(3)

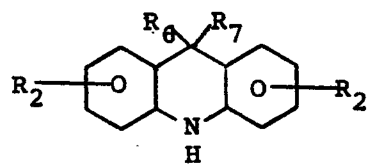,

(4)

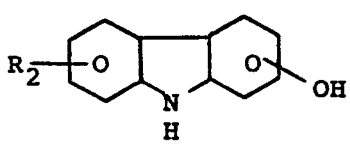,

(5)

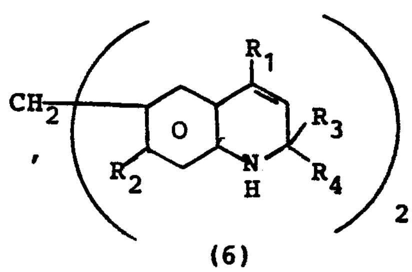,

(6)

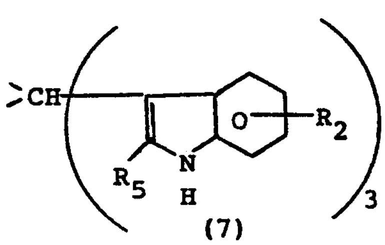,

(7)

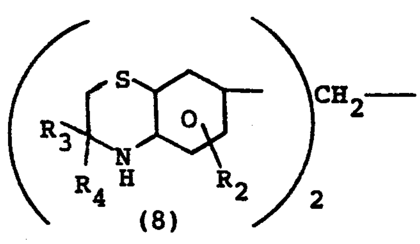

(8)

in denen

$R_1$ Wasserstoff, $C_1 - C_4$ Alkyl

$R_2$ Wasserstoff, $C_1 - C_{14}$ Alkyl, $C_1 - C_{14}$ Alkoxy, $C_1 - C_{14}$ Alkyl-phenyl, Phenyl, Naphthyl, Hydroxyl, $C_1 - C_{14}$ Alkylhydroxyl

$R_3$ und $R_4$ gleich oder verschieden Wasserstoff, $C_1 - C_4$ Alkyl

$R_5$ Wasserstoff, $C_1 - C_4$ Alkyl

$R_6$ und $R_7$ gleich oder verschieden Wasserstoff, $C_1 - C_4$ Alkyl

bedeuten,
eingesetzt werden und die Vernetzung in üblicher Weise durchgeführt wird.

In den obigen Formeln bedeutet $R_2$ bevorzugt Wasserstoff, $C_1 - C_{14}$ Alkyl, $C_1 - C_4$ Alkoxy und Phenyl.

Besonders bevorzugt seien genannt:

Isochinolin, 9H-Carbazol-2-ol, Dimethylacridan,Chinolin sowie seine 4- bzw. 6-Methylderivate, 1H-Indol sowie seine 2-Methyl- bzw. 2, 3, 5 Trimethylderivate, 2,2,4-Trimethyl-1,2-dihydrochinolin sowie sein 5-, 6-, 7- oder 8-Methylderivat, sein 6 Äthoxy, oder 6-Dodecyl, oder sein 6-Phenylderivat, Verbindung der Formel 6 mit $R_1$, $R_3$ und $R_4$ gleich Wasserstoff oder Methyl und $R_2$ gleich

Wasserstoff. Verbindung der Formel 7 mit $R_2$ und $R_5$ gleich Wasserstoff. Verbindung der Formel 8 mit $R_2$, $R_3$ und $R_4$ gleich Wasserstoff. Weiterhin bevorzugt genannt sind die Oligomere (Oligomerisationsgrad 2 - 15) des obigen 1,2 Dihydrochinolins.

Insbesondere seien aufgeführt:
2,2,4-Trimethyl-1,2-dihydrochinolin oder sein Oligomeres, 6-Methyl-, 6 Äthoxy-, 6-Dodecyl-, oder 6-Phenyl-2,2,4 trimethyl-1,2-dihydrochinolin sowie sein Oligomeres. 2,2,4-Trimethyl-1,2-dihydrochinolin wird im folgenden mit der Abkürzung TMDHCH bezeichnet.

Die Verbindungen sind literaturbekannt.

Am Beispiel des TMDHCH wurde beobachtet, daß die Reaktivität bei der Vernetzungsreaktion abhängig vom Grad der Olimerisierung ist (s. Beispiel 15). Es läßt sich somit durch Auswahl des Oligomerisierungsgrades oder durch gleichzeitigen Zusatz verschiedener Oligomerisierungsgrade eine Steuerung der Vernetzungsreaktion bewirken.

Als Polymere mit aktivem Halogen seien bevorzugt halogenhaltige Dienkautschuke genannt, wie z.B. chloriertes Polyisopren, chlorierter oder bromierter Naturkautschuk, Chlor- und Brombutylkautschuk sowie besonders bevorzugt Polychloropren. Diese Polymere zeichnen sich dadurch aus, daß sie ein reaktionsfähiges Halogenatom besitzen.

Als Polychloropren können sowohl nicht mit Schwefel als auch mit Schwefel modifizierte Polymerisate des Chloroprens oder deren Gemische eingesetzt werden. Weiterhin ist es möglich, Copolymerisate zu verwenden, die bis zu 5o % eine mit Chloropren copolymerisierbare Verbindung

enthalten (wie z.B. Monovinylverbindungen (Acrylnitril, Methacrylnitril, Vinylidenchlorid, α-Chloracrylnitril, Methaacrylsäureester, Acrylsäureester), vinylsubstituierte aromatische Verbindungen (Styrol, Vinyltoluole) und konjugierte Dienverbindungen (Butadien-(1,3), 1-Chlorbutadien-(1,3), 2,3-Dichlorbutadien-(1,3), 2-Chlor-3-methylbutadien-(1,3)).

Bei Verwendung der Verbindungen entsprechend obiger Formeln, bevorzugt bei TMDHCH und besonders bevorzugt in oligomerer Form mit einem Schmelzpunkt von ca. 7o° C, wird gefunden, daß man einerseits eine technisch gut verwertbare Vernetzung - vorzugsweise bei Polychloropren - bei Raumtemperatur bzw. bei angehobener Raumtemperatur (RT) erhält und andererseits besitzen die Mischungen eine Verarbeitungssicherheit, wie sie mit bisher üblichen Polychloropren-Beschleunigersystemen nur erreicht wird, wenn man auf Selbstvulkanisation verzichtet. Ferner tritt bei RT und leicht angehobener RT trotz langer Inkubationszeit keine Verlängerung der Ausvulkanisationszeit bei RT auf (Siehe Beispiel 9).

Diese Erkenntnis ermöglicht bisher nicht durchführbare Verfahren zur Herstellung von Gummiartikeln. Es erübrigen sich durch dieses Verfahren der Vernetzung bei RT oder angehobener RT in vielen Fällen kosten- und besonders energieaufwendige Vulkanisiereinrichtungen. Diese Vulkanisiereinrichtungen sind im wesentlichen nicht nur zur Energiezufuhr erforderlich, sondern auch zur Aufbringung eines äußeren Druckes nötig, um Porosität im Vulkanisat zu unterbinden.

Rezepturtechnische Sondermaßnahmen wie der Zusatz von Wasserbindern, die sich wiederum ungünstig auf die Vulkanisat-werte auswirken, sind nicht erforderlich, da die Vernetzung bei RT und angehobener RT weit unter dem Siedepunkt des Wassers bleibt. Ebenso kann in vielen Fällen auf die Benutzung eines Vakuumextruders verzichtet werden, weil bei RT und angehobener RT andere leicht flüchtige Mischungsbestandteile noch nicht zu Porosität führen.

Es können Vulkanisiereinrichtungen um ein mehrfaches ausgenutzt werden, wobei man nur eine formgebende Vorvernetzung eintreten läßt, und die weitere Vernetzung bei RT oder angehobener RT durch Selbstvulkanisation mittels des neuartigen Vernetzungssystems durchführt (Beispiele 1o, 11, 12).

Die gefundenen Substanzen, vorzugsweise das oligomere TMDHCH lassen sich auch zur Vernetzung von Klebstoff-Filmen, vorzugsweise auf Basis Polychloropren, verwenden. Hierbei wird überraschend gefunden, daß trotz des Zusatzes des sogenannten Vernetzers, der bisher im allgemeinen aus einem Isocyanat besteht, die sogenannte Topfzeit um ein erheblich Vielfaches verlängert wird bzw. nicht beeinflußt wird. Der Fachmann weiß, daß mit Isocyanaten die Topfzeit nur Stunden beträgt. Erfindungsgemäß trat an unserem Beispiel nach 2o Tagen keine Viskositätsveränderung der Polychloropren-Kleberlösung ein (Beispiel 13).

Man kann daraus schließen, daß keine Vernetzungsreaktion eintritt, solange Lösungsmittel anwesend sind.

Die neuartigen Vernetzungssysteme lassen sich auch im Latexbereich verwenden. So wurde gefunden, daß, vorzugsweise TMDHCH (FP. ca. 7o°C), ein Polychloropren-Latex-Gießfilm sowohl bei üblichen Vulkanisationstemperaturen als auch bei RT und angehobener RT vernetzt (Siehe Beispiel 14).

Die Verbindungen wirken also wie bei Festkautschuk, wenn einmal das Polymer des Latex ausgefällt ist.

Die Vernetzungsreaktion läuft auch mit reinem Polymer ab, d.h. es sind generell keine Metalloxide erforderlich. (Siehe Beispiel 16).
Somit lassen sich z.B. in Polychloroprenmischungen, bei geeigneter Stabilisierung, die dem Fachmann bekannten Nachteile der Metalloxide vermeiden.

Es wurde gefunden, daß z.B. nicht nur an Polychloropren-Merkaptan-Typen, sondern auch an Polychloropren-Thiuram-Typen (=schwefelmodifizierte Typen) mit TMDHCH (FP. ca. 7o°C) bei RT und angehobener RT Vernetzungsreaktionen ablaufen (Siehe Beispiel 17).

Diesen also auch bei Thiuram-Typen ablaufenden Reaktionsmechanismus und die Abhängigkeit vom Oligomerisationsgrad kann man sich zu Nutze machen, um ein dem Fachmann bekanntes Problem der Lagerung von schwefelmodifizierten Polychloropren-Typen weitgehend zu lösen.

Die Stabilität der Viskosität (z.B. Mooney-Viskosität bei 1oo° C) des rohen Polymers ist bekanntlich nicht

in dem Maße gegeben, wie z.B. bei Polychloropren-Merkaptan-Typen. Durch Zusatz geringer Mengen des monomeren TMDHCH oder geringer Mengen des 6-Äthoxy-TMDHCH kann die bei Lagerung des schwefelmodifizierten Polychloropren-Typs üblicherweise weiter fortschreitende Abbaureaktion gestoppt bzw. überdeckt werden durch eine gezielte Vorvernetzung. Somit wurde eine verbesserte Konstanz der Viskosität bei Lagerung des Rohpolymeren erreicht (Siehe Beispiel 18).

Eine weitere überraschende Besonderheit dieser neuen Vernetzungsmöglichkeit, vorzugsweise mittels TMDHCH (FP. ca. 7o°C), ist, daß die Vernetzungsreaktion bei Anwendung der optimalen Dosierung von 1,5 bis 2,5 phr zu einem Abschluß kommt, und bei sogenannter Übervulkanisation praktisch keine weitere Vernetzung eintritt, wie es bei den bisher verwendeten Vernetzungssystemen der Fall ist. Dieses wird deutlich am Verlauf der Vulkameterkurve, die dann nach Abschluß der Hautvernetzungsreaktion praktisch parallel zur Zeitachse verläuft. Es wird sogar gelegentlich ein schwaches Maximum des Schubmoduls beobachtet. Das bedeutet, daß die Differenz zwischen $T_{9o} - T_{8o}$ (Zeit für 9o bzw. 8o % Umsatz) sehr klein ist (Siehe Beispiel 19).

Diese Eigenschaft ist technologisch dahingehend von Bedeutung, daß bei Vulkanisation von großvolumigen Teilen bei üblichen Vulkanisationstemperaturen die äußeren Schichten den gleichen Vernetzungsgrad aufweisen wie die Mitte des Vulkanisates, wodurch, welches jedem Fachmann bekannt ist, ein verbessertes dynamisches Verhalten des Artikels erzielt wird.

Es hat sich gezeigt, daß die neuartige Vernetzungsreaktion, vorzugsweise das TMDHCH mit FP.ca.7o°C, auch in Kombination mit bisher bekannten Beschleunigern/Vernetzern einschließlich Schwefel und Schwefelspendern eingesetzt werden kann. Hierbei bleibt unerwarteterweise bei einer Beeinflussung der Vernetzungsgeschwindigkeit und des Vernetzungsgrades bei üblichen Vulkanisationstemperaturen die Eigenschaft der Vernetzung bei Raumtemperatur und erhöhter Raumtemperatur erhalten. (Siehe Beispiele 2o, 21, 22).

Eine weitere Besonderheit dieses neuartigen Vernetzungsverfahrens ist, daß sich im Vergleich zu den bisher überwiegend im Einsatz befindlichen Thioharnstoffen ein wesentlich verbessertes dynamisches Rißbildungs- und Rißwachstumsverhalten zeigt (Siehe Beispiel 19).

Zur Vernetzung der Polymere mit aktivem Halogen können die erfindungsgemäß einsetzbaren Vernetzungsmittel in dem Fachmann geläufigen Mengen zugegeben werden.

Bevorzugt sind für die Vernetzung Mengen von o,1 bis 15 Gew.-Teile, besonders bevorzugt o,3 bis 3 Gew.-Teile pro 1oo Gew.-Teile Festkautschuk.

Für die Viskositätsstabilisierung bzw. Vorvernetzung von schwefelmodifizierten bzw. nicht schwefelmodifizierten Polychloropren-Typen werden Mengen von o,o1 bis 1,o Gew.-Teile pro 1oo Gew.-Teile Festkautschuk bevorzugt.

Die erfindungsgemäßen Substanzen können alleine, aber auch in Kombination mit den bisher bekannten Vernetzern bzw. Beschleunigern, besonders mit Thioharnstoff, Thiuram/Amin, Schwefel/Thiuram /Guanidin, Thiazolidinthion , Thiadiazin und Triazin eingesetzt werden.

Die Vernetzungstemperatur ist dem Fachmann geläufig und hängt ab von den jeweiligen Vernetzungsverfahren. Sie beträgt bevorzugt Raumtemperatur (d.h. je nach klimatischen und jahreszeitlichen Bedingungen bis zu ca. + 5°C) bis zu + 27o°C, besonders bevorzugt + 4o°C bis + 2oo°C.

Als Vulkanisationsverfahren seien beispielhaft genannt: Pressenheizung, Heißluftheizung, Heißdampfheizung, Einspritz- und Transfervulkanisationsverfahren, kontinuierliche Verfahren in Heißdampfer, Heißluft, Infrarot, Heißluft/Mikrowellen, Salzbad, Fluidbed, auch sogenannte Auma-verfahren für Folien,gummierte Gewebe, Platten, Keilriemen und Treibriemen, ferner Bleimantelverfahren. Ebenfalls können die Vernetzer auch bei Raumtemperatur ohne Außendruck für ein sogenanntes Selbstvulkanisationsverfahren Verwendung finden.

Es können auch Kombinationen von Verfahren angewandt werden. Einmal kann bei Raumtemperatur oder angehobener RT eine Vorvernetzung durchgeführt werden und anschließend eine Weitervernetzung bei hoher Temperatur vorgenommen werden, wobei eine endgültige Vernetzung auch wieder bei RT oder angehobener RT möglich ist.

Umgekehrt kann aber auch erst bei hoher Temperatur eine Vorvernetzung bewirkt werden, die so gering sein kann, daß das vorvernetzte Material noch walzbar, d.h. wiederverwendbar ist. Anschließend kann die Endvernetzung drucklos bei RT bzw. angehobener RT erfolgen.

Als weitere Mischungsbestandteile können den nach diesem Verfahren vernetzbaren Polymeren, bevorzugt dem Polychloropren bzw. dem Chlor- und Brombutylkautschuk die üblichen Bestandteile zugesetzt werden, wie sie in der Festkautschuk-, Latex- und Klebstoff-Technologie Stand der Technik sind, beispielsweise also Metalloxide wie beispielsweise Zinkoxid, Magnesiumoxid, Calciumoxid oder Bleioxide, aktive und inaktive Ruße sowie helle Füllstoffe wie Kieselsäuren, Kaoline (siehe Beispiel 23) und Kreiden, Kieselkreiden, Weichmacher, Alterungsschutz- und Ozonschutzmittel, Treibmittel und Verarbeitungshilfen wie Faktis, Stearinsäure, Polyethylenwachs, Paraffine, Harze und Vaseline.

Es können auch den nach diesem Verfahren vernetzbaren Polymeren andere bekannte Polymere zugesetzt werden, wie es jedem Fachmann bekannt ist.
Beispielhaft seien genannt: NR, IR, SBR, BR, EPM, EPDM, NBR, PVC, Styrol, EVAC, CM, PE, PP.

Beispiel 1

Herstellung einer Polychloropren-Mischung in bekannter Weise nach folgender Rezeptur auf einem Mischwalzwerk:

| | | | | |
|---|---|---|---|---|
| Polychloropren (nicht schwefelmodifiziert) | 1oo | 1oo | 1oo | 1oo |
| Stearinsäure | o,5 | o,5 | o,5 | o,5 |
| MgO | 4 | 4 | 4 | 4 |
| alkyliertes Diphenylamin | 2 | 2 | 2 | 2 |
| Ruß N 762 | 3o | 3o | 3o | 3o |
| Zinkoxyd aktiv | 5 | 5 | 5 | 5 |
| TMDHCH (FP ca. $70^{\circ}$C) | 2 | - | - | - |
| TMDHCH (flüssig) | - | 2 | - | - |
| Ethylenthioharnstoff | - | - | o,5 | - |
| Tetramethylthiurammonosulfid | - | - | - | 1 |
| Diorthotoluylguanidin | - | - | - | 1 |
| Schwefel | - | - | - | o,5 |
| Mooney-Anvulkanisationszeit $120^{\circ}$C (min) | 11 | 28 | 11 | > 45 |
| Vulkameter $150^{\circ}$C (Laufzeit 40') *) | | | | |
| $T_{10}$ (min) | 4,5 | 6,5 | 3,5 | 1o,5 |
| $T_{50}$ (min) | 9 | 11 | 8,5 | 15 |
| $T_{80}$ (min) | 12 | 14 | 16 | 2o |
| $T_{90}$ (min) | 14 | 15 | 21 | 24 |
| Schubmodul-Maximum (N) | 32 | 22 | 27 | 25 |
| Vulkameter $170^{\circ}$C (Laufzeit 40') | | | | |
| $T_{10}$ (min) | 2,2 | 2,9 | 1,8 | 4,o |
| $T_{50}$ (min) | 3,9 | 5,o | 3,7 | 5,6 |
| $T_{80}$ (min) | 5,3 | 6,7 | 6,7 | 8,1 |
| $T_{90}$ (min) | 6,o | 16,7 | 1o,7 | 11.8 |
| Schubmodul-Maximum (N) | 34 | 26 | 29 | 28 |
| Vulkanisat-Grundwerte $150^{\circ}$C Mittelwerte der 2o'3o'4o'Heizung | | | | |
| Zerreißfestigkeit (MPa) | 17,8 | 19,3 | 19,2 | 19,5 |
| Bruchdehnung (%) | 445 | 635 | 475 | 64o |
| Spannungswert bei 300% Dehnung (MPa) | 9,5 | 5,9 | 9,o | 6,2 |
| H (Shore A) | 61 | 55 | 62 | 56 |
| Rückprallelastizität (%) | 46 | 44 | 49 | 46 |

*) Anmerkung: Die hier und in folgenden Bespielen genannten Laufzeiten von 4o bzw. 2o Minuten ergeben die Bezugsgröße zur Ermittlung der Vulkameterdaten.

Beispiel 1 (Fortsetzung)

| | | | | |
|---|---|---|---|---|
| Heißluftalterung bei 100°C nach 7 Tagen | | | | |
| D/Do·100 (%) 150°C/30' | 84 | 94 | 96 | 77 |
| 45' | 85 | 88 | 99 | 8o |
| Härteänderung (Shore A) | | | | |
| 150°C/30' | +1o | +14 | + 1 | + 7 |
| 45' | + 9 | +13 | + 2 | +7 |
| Druckverformungsrest 150°C/45' | | | | |
| 22h/ 70°C (%) | 9 | 17 | 8 | 11 |
| 70h/100°C (%) | 34 | 47 | 25 | 64 |

Beispiel 2

Derivate des TMDHCH als Vernetzer für Polychloropren

2,2,4-Trimethyl-1,2-dihydro-6-äthoxychinolin = I

2,2,4-Trimethyl-1,2-dihydro-6-phenylchinolin = II

2,2,4-Trimethyl-1,2-dihydro-6-dodecylchinolin = III

5,5' -Dimethylacridan = IV

Mischungsherstellung in bekannter Weise. (Das Vergleichs-Vernetzungssystem stellt ein übliches Schwefel/Guanidin/Thiuram-System dar).

| | A | B | C | D | E |
|---|---|---|---|---|---|
| Polychloropren 1) | 1oo | 1oo | 1oo | 1oo | 1oo |
| Stearinsäure | o,5 | o,5 | o,5 | o,5 | o,5 |
| Magnesiumoxid leicht | 4 | 4 | 4 | 4 | 4 |
| alkyliertes Diphenylamin | 2 | 2 | 2 | 2 | 2 |
| Ruß N 762 | 3o | 3o | 3o | 3o | 3o |
| Zinkoxid | 5 | 5 | 5 | 5 | 5 |
| I (6-Äthoxy) | 2 | - | - | - | - |
| II (6-Phenyl) | - | 2 | - | - | - |
| III (6-Dodecyl) | - | - | 2 | - | - |
| IV (Acridan) | - | - | - | 2 | - |
| Schwefel | - | - | - | - | o,5 |
| o-Tolylbiguanid | - | - | - | - | 1 |
| Tetramethylthiurammonosulfid | - | - | - | - | 1 |
| **Mooney-Anvulkanisationszeit 120°C MS5 (min)** | | | | | |
| | 33 | >45 | >45 | >45 | >45 |
| **Vulkanisateigenschaften am Normring I (150°C/30')** | | | | | |
| Zugfestigkeit (MPa) | 19,o | 15,7 | 16,7 | 18,7 | 19,9 |
| Bruchdehnung (%) | 675 | 75o | 735 | 73o | 625 |
| Spannungswert bei 3oo% Dehnung (MPa) | 5,o | 3,6 | 3,9 | 4,5 | 6,5 |
| Härte (Shore A) | 53 | 5o | 5o | 51 | 58 |

1) nicht schwefelmodifiziert

**Beispiel 3**

**Vernetzung von Polychloropren mit Chinolin-, Indol- sowie Carbazol-Körpern**

| | |
|---|---|
| 1H-Indol | = I |
| 2-Methyl-1H-Indol | = II |
| 2,3,5-Trimethyl-1H-Indol | = III |
| 4-Methylchinolin | = IV |
| Chinolin | = V |
| 9H-Carbazol-2-ol | = VI |
| Isochinolin | = VII |
| 6-Methylchinolin | = VIII |

Mischungsherstellung in bekannter Weise (das Vergleichsvernetzungssystem stellt ein übliches Schwefel/Guanidin/Thiuram-System dar).

| | A | B | C | D | E | F | G | H | I |
|---|---|---|---|---|---|---|---|---|---|
| Polychloropren*) | 1oo | 1oo | 1oo | 1oo | 1oo | 1oo | 1oo | 1oo | 1oo |
| Stearinsäure | o,5 | o,5 | o,5 | o,5 | o,5 | o,5 | o,5 | o,5 | o,5 |
| MgO leicht | 4 | 4 | 4 | 4 | 4 | 4 | 4 | 4 | 4 |
| alkyliertes Diphenylamin | 2 | 2 | 2 | 2 | 2 | 2 | 2 | 2 | 2 |
| Ruß N 762 | 3o | 3o | 3o | 3o | 3o | 3o | 3o | 3o | 3o |
| Zinkoxid | 5 | 5 | 5 | 5 | 5 | 5 | 5 | 5 | 5 |
| I | 2 | - | - | - | - | - | - | - | - |
| II | - | 2 | - | - | - | - | - | - | - |
| III | - | - | 2 | - | - | - | - | - | - |
| IV | - | - | - | 2 | - | - | - | - | - |
| V | - | - | - | - | 2 | - | - | - | - |
| VI | - | - | - | - | - | 2 | - | - | - |
| VII | - | - | - | - | - | - | 2 | - | - |
| VIII | - | - | - | - | - | - | - | 2 | - |
| Schwefel | - | - | - | - | - | - | - | - | o,5 |
| Tetramethylthiuram-monosulfid | - | - | - | - | - | - | - | - | 1 |
| o-Tolylbiguanid | - | - | - | - | - | - | - | - | 1 |

**Vulkameter 170°C/20 min Laufzeit**

| | A | B | C | D | E | F | G | H | I |
|---|---|---|---|---|---|---|---|---|---|
| Schubmodul-Minimum (N) | o,8 | o,7 | 1,o | o,3 | o,9 | 1,1 | 1,o | o,8 | o,1 |
| Schubmodul-Maximum (N) | 17,9 | 17,7 | 18,o | 19,7 | 21,3 | 2o,5 | 22,1 | 21,7 | 21,o |
| $T_{10}$ (min) | 3,9 | 3,8 | 3,7 | 3,4 | 4,7 | 1,8 | 3,7 | 4,6 | 3,8 |
| $T_{50}$ (min) | 6,3 | 5,9 | 6,o | 9,9 | 9,9 | 2,7 | 1o,2 | 1o,2 | 5,5 |
| $T_{80}$ (min) | 9,7 | 8,4 | 9,4 | 15,o | 14,4 | 4,1 | 14,8 | 14,7 | 7,9 |
| $T_{90}$ (min) | 12,8 | 11,7 | 12,4 | 17,1 | 16,7 | 7,9 | 17,o | 16,9 | 1o,8 |

*) nicht schwefelmodifiziert

**Beispiel 4**

**Vernetzung von Polychloropren mit weiteren Derivaten des 2,2,4-Trimethyl-1,2-dihydrochinolin (TMDHCH)**

| | |
|---|---|
| Oligomeres TMDHCH, Methylgruppe am Benzolkern, unbestimmte Lage | = I |
| TMDHCH, gekoppelt in 6-Stellung über $CH_2$ | = II |
| Oligomeren-Gemisch aus 7-Methyl-TMDHCH und 5-Methyl-TMDHCH | = III |
| Oligomeres 6-Methyl-TMDHCH | = IV |
| Oligomeres 8-Methyl-TMDHCH | = V |
| Oligomeres TMDHCH (FP ca. 7o°C) | = VI |

Mischungsherstellung in bekannter Weise (als Vergleich wird das bevorzugte TMDHCH mit FP ca.7o° C herangezogen)

| | A | B | C | D | E | F |
|---|---|---|---|---|---|---|
| Polychloropren*) | 1oo | 1oo | 1oo | 1oo | 1oo | 1oo |
| Stearinsäure | o,5 | o,5 | o,5 | o,5 | o,5 | o,5 |
| Magnesiumoxid leicht | 4 | 4 | 4 | 4 | 4 | 4 |
| alkyliertes Diphenylamin | 2 | 2 | 2 | 2 | 2 | 2 |
| Ruß N 762 | 3o | 3o | 3o | 3o | 3o | 3o |
| Zinkoxid | 5 | 5 | 5 | 5 | 5 | 5 |
| I | 2 | - | - | - | - | - |
| II | - | 2 | - | - | - | - |
| III | - | - | 2 | - | - | - |
| IV | - | - | - | 2 | - | - |
| V | - | - | - | - | 2 | - |
| VI | - | - | - | - | - | 2 |
| **Mooney-Anvulkanisationszeit 120°C MS5 (min)** | | | | | | |
| nach Mischungsherstellung | 27 | 11 | 37 | 34 | 32 | 8 |
| nach 7 Tagen / 20°C | 28 | 9 | 36 | 33 | 29 | 5 |
| nach 14 Tagen / 20°C | 24 | 5 | 34 | 29 | 25 | 6 |
| nach 28 Tagen / 20°C | 2o | 1 | 25 | 2o | 23 | 1 |
| **Defoelastizität bei 80°C (%)** | | | | | | |
| ca.60% entspricht voller Vernetzung | | | | | | |
| nach Mischungsherstellung | 2o | 21 | 21 | 2o | 21 | 21 |
| nach 4 Tagen / 40°C | 23 | 43 | 24 | 22 | 22 | 5o |
| nach 7 Tagen / 40°C | 31 | 5o | 27 | 29 | 29 | 58 |
| nach 14 Tagen / 40°C | 45 | 58 | 43 | 46 | 39 | 6o |

*) nicht schwefelmodifiziert

Beispiel 4 (Fortsetzung)

| | A | B | C | D | E | F |
|---|---|---|---|---|---|---|
| **Defoelastizität bei 80°C (%)** | | | | | | |
| nach Mischungsherstellung | 2o | 21 | 21 | 2o | 21 | 21 |
| nach 1 Tag / 70°C | 39 | 56 | 33 | 34 | 34 | 6o |
| nach 2 Tagen / 70°C | 6o | 6o | 6o | 6o | 5o | - |

| Vulkanisateigenschaften am Normstab S2 (170°C/10 min) | A | B | C | D | E | F |
|---|---|---|---|---|---|---|
| Zugfestigkeit (MPa) | 21,3 | 2o,3 | 21,8 | 19,7 | 21,7 | 2o,6 |
| Bruchdehnung (%) | 615 | 5oo | 695 | 67o | 555 | 485 |
| Spannungswert bei 3oo%Dehn.(MPa) | 7,7 | 1o,3 | 6,3 | 5,7 | 8,7 | 1o,7 |
| Härte (Shore A) | 56 | 6o | 54 | 52 | 58 | 6o |

## Beispiel 5

**Vernetzung von Polychloropren mit TMDHCH-analogen Substanzen**

**2,2-Dimethyl-1,2-hydrochinolin mit S in Stellung 4 im Heterokern, in 6-Stellung"dimerisiert"über $CH_2$ = I (Formel 8)**

**1H-Indol, in Stellung 3 über CH "trimerisiert" = II (Formel 7)**

Mischungsherstellung in bekannter Weise.

| | A | B |
|---|---|---|
| Polychloropren,nicht Schwefelmodifiziert | 1oo | 1oo |
| Stearinsäure | o,5 | o,5 |
| Magnesiumoxid leicht | 4 | 4 |
| alkyliertes Diphenylamin | 2 | 2 |
| Ruß N 762 | 3o | 3o |
| Zinkoxid | 5 | 5 |
| I | 2 | - |
| II | - | 2 |

| | A | B |
|---|---|---|
| Mooney-Anvulkanisationszeit 120°C MS5 (min) | 41 | >45 |
| **Vulkameter 170°C (40 min Laufzeit)** | | |
| Schubmodul-Minimum (N) | 1,2 | 1,5 |
| Schubmodul-Maximum (N) | 22,4 | 24,9 |
| $T_{10}$ (min) | 3,1 | 5,o |
| $T_{50}$ (min) | 5,1 | 14,5 |
| $T_{80}$ (min) | 6,6 | 21,7 |
| $T_{90}$ (min) | 8,1 | 26,9 |

| Vulkanisateigenschaften am Normstab S2 (170°C/min | 1o | 3o) |
|---|---|---|
| Zugfestigkeit (MPa) | 23.2 | 19,9 |
| Bruchdehnung (%) | 65o | 585 |
| Spannungswert bei 300% Dehnung (MPa) | 6,7 | 7,2 |
| Härte (Shore A) | 54 | 58 |

Beispiel 6



Vernetzung von Brom-Butylkautschuk mit TMDHCH

Mischungsherstellung in bekannter Weise

| | A | B |
|---|---|---|
| Brom-Butylkautschuk*) | 100 | 100 |
| Ruß N 650 | 68 | 68 |
| Paraffinisches Mineralöl | 20 | 2o |
| Stearinsäure | 0,5 | o,5 |
| Koresin | 2 | 2 |
| Cumaronharz,flüssig | 2 | 2 |
| Phenyl-α-Naphthylamin | 1,5 | 1,5 |
| Magnesiumoxid | 0,4 | o,4 |
| Zinkoxid | 3 | 3 |
| Dibenzothiazyldisulfid | 1,25 | - |
| Schwefel | 1 | - |
| TMDHCH (FP ca. 70°C) | - | 2 |

(Rezeptur stellt den Stand der Technik dar für Reifen-Tubless-Platte)

| | A | B |
|---|---|---|
| Mooney-Anvulkanisationszeit 120°C MS5 (min) | | |
| nach Mischungsherstellung | 33 | 8 |
| Mooney-Viskosität 100°C ML1+4 (ME) | | |
| nach Mischungsherstellung | 61 | 64 |
| nach 3 Tagen / 20°C | 62 | 76 |
| nach 7 Tagen / 20°C | 63 | 96 |
| nach 14 Tagen / 20°C | 65 | > 200 |
| Defohärte bei 80°C (N) | | |
| nach Mischungsherstellung | 11,8 | 15,0 |
| nach 3 Tagen / 20°C | 9,5 | 26,5 |
| nach 7 Tagen / 20°C | 9,7 | 40,0 |
| nach 14 Tagen / 20°C | 10,2 | 58,0 |
| nach 28 Tagen / 20°C | 11,8 | 107,9 |

Anmerkung zum Beispiel 3

*) Bromo-Butyl X2 der Firma Polysar

Beispiel 6 (Fortsetzung)

| Defoelastizität bei 80°C (%) (60% entspricht voller Vernetzung) | | |
|---|---|---|
| nach Mischungsherstellung | 10 | 13 |
| nach 3 Tagen / 20°C | 10 | 43 |
| nach 7 Tagen / 20°C | 9 | 51 |
| nach 14 Tagen / 20°C | 9 | 55 |
| nach 28 Tagen / 20°C | 9 | 60 |

| Vulkanisateigenschaften am Normring I (150°C/30') | | |
|---|---|---|
| Zugfestigkeit (MPa) | 9,3 | 8,1 |
| Bruchdehnung (%) | 480 | 235 |
| Spannungswert bei 100% Dehnung (MPa) | 1,7 | 3,0 |
| Härte (Shore A) | 60 | 65 |

Beispiel 7

Vernetzung von Chlor-Butylkautschuk mit TMDHCH

| Mischungsherstellung in bekannter Weise | A | B |
|---|---|---|
| Chlor-Butylkautschuk*) | 100 | 100 |
| Paraffinöl | 5 | 5 |
| Cumaronharz | 3 | 3 |
| Stearinsäure | 2 | 2 |
| Ruß N 539 | 30 | 3o |
| Whitetex Nr.2 | 50 | 5o |
| Zinkoxid | 3 | 3 |
| Diphenylthioharnstoff | 0,5 | - |
| Zink-N-äthylphenyldithiocarbamat | 1 | - |
| TMDHCH (FP ca. 70°C) | - | 2 |

(Rezeptur stellt den Stand der Technik dar für selbstvulkanisierende Auskleidungsfolie)

| Mooney-Anvulkanisationszeit 120°C MS5 (min) | A | B |
|---|---|---|
| nach Mischungsherstellung | 7 | 24 |
| nach 2 Tagen / 70°C | 6 | 12 |
| nach 4 Tagen / 70°C | vulkanisiert | 7 |
| nach 7 Tagen / 70°C | " | vulkanisiert |

| Mooney-Viskosität 100°C ML1+4 (ME) | A | B |
|---|---|---|
| nach Mischungsherstellung | 68 | 66 |
| nach 2 Tagen / 70°C | >200 | 81 |
| nach 4 Tagen / 70°C | >200 | 122 |
| nach 7 Tagen / 70°C | >200 | >200 |

| Defohärte bei 80°C (N) | A | B |
|---|---|---|
| nach Mischungsherstellung | 11,8 | 12,0 |
| nach 2 Tagen / 70°C | 107,9 | 18,1 |
| nach 4 Tagen / 70°C | 152,0 | 41,7 |
| nach 7 Tagen / 70°C | 166,7 | 100,1 |

Anmerkung

*) Butyl HT 10-66 der Firma Esso

Beispiel 7 (Fortsetzung)

Defoelastizität bei 80°C (%)
(60% entspricht voller Vernetzung)

| | | |
|---|---|---|
| nach Mischungsherstellung | 14 | 13 |
| nach 2 Tagen / 70°C | 60 | 17 |
| nach 4 Tagen / 70°C | 58 | 45 |
| nach 7 Tagen / 70°C | 58 | 57 |

Vulkanisateigenschaften am Normring I (150°C/30')

| | | |
|---|---|---|
| Zugfestigkeit (MPa) | 7,5 | 6,5 |
| Bruchdehnung (%) | 590 | 390 |
| Spannungswert bei 300% Dehnung (MPa) | 3,6 | 5,1 |
| Härte (Shore A) | 54 | 61 |

Beispiel 8

Reaktion von TMDHCH (FP ca. 70°C) mit Chlorkautschuk

| | | A | B |
|---|---|---|---|
| Chlorkautschuk*) | (g) | 100 | 100 |
| Trichloräthylen | ($cm^3$) | 250 | 250 |
| Toluol | ($cm^3$) | 250 | 250 |
| TMDHCH (FP ca. 70°C) | (g) | - | 10 |

Es wurde ein Film gegossen
Trocknung bzw. Lagerung 6 Tage bei 20°C
Anschließend daran 1 Tag bei 70°C

Prüfung des Schmelzverhaltens der Filme unter dem Mikroskop:
A und B erweichen bei ca. 115°C
Film A beginnt ab 115°C mit Blasenbildung
Film B zeigt erst ab 160°C Blasenbildung

*) Pergut S40

Beispiel 9

Vernetzung mit 2,2,4 Trimethyl-1,2-dihydrochinolin (TMDHCH)
Selbstvulkanisation von Polychloropren

Mischungsherstellung in bekannter Weise

| | A | B |
|---|---|---|
| Polychloropren, nicht schwefelmodifiziert | 100 | 100 |
| Ruß N 330 | 25 | 25 |
| Kaolin weich | 60 | 60 |
| Faktis | 10 | 10 |
| aromatisches Mineralöl | 12 | 12 |
| Cumaronharz | 5 | 5 |
| alkyliertes Diphenylamin | 1,5 | 1,5 |
| Stearinsäure | 0,5 | 0,5 |
| Bleimennige | 20 | 20 |
| Aldehydamin-Beschleuniger *) | 2 | - |
| Diphenylthioharnstoff | 2 | - |
| TMDHCH (FP ca. 70°C) | - | 2 |

(Rezeptur stellt den Stand der Technik dar in Bezug auf Selbstvulkanisation, z.B. für Behälterauskleidung)

| Mooney-Anvulkanisationszeit 120°C MS5 (min) | A | B |
|---|---|---|
| nach Mischungsherstellung | 1,5 | 9,5 |
| nach 3 Tagen / 20°C | 0,5 | 6,8 |
| nach 7 Tagen / 20°C | ca. 0,5 | 3,4 |

| Mooney-Viskosität 100°C ML1+4 (ME) | A | B |
|---|---|---|
| nach Mischungsherstellung | 74 | 52 |
| nach 3 Tagen / 20°C | >200 | 65 |
| nach 7 Tagen / 20°C | >200 | 100 |
| nach 14 Tagen / 20°C | >200 | >200 |

| Defohärte bei 80°C (N) | A | B |
|---|---|---|
| nach Mischungsherstellung | 9,5 | 7,3 |
| nach 3 Tagen / 20°C | 32,5 | 10,0 |
| nach 7 Tagen / 20°C | 39,0 | 15,5 |
| nach 14 Tagen / 20°C | 45,5 | 23,5 |
| nach 28 Tagen / 20°C | 65,0 | 62,5 |

Anmerkung

*) Kondensationsprodukt homologer Acroleine mit aromatischen Basen

Beispiel 9 (Fortsetzung) 

| | | |
|---|---|---|
| **Defoelastizität bei 80°C (%)** | | |
| (60% entspricht voller Vernetzung) | | |
| nach Mischungsherstellung | 23 | 15 |
| nach 3 Tagen / 20°C | 47 | 18 |
| nach 7 Tagen / 20°C | 51 | 30 |
| nach 14 Tagen / 20°C | 53 | 48 |
| nach 28 Tagen / 20°C | 56 | 58 |
| **Vulkanisateigenschaften am Normstab S2** | | |
| **Zugfestigkeit (MPa)** | | |
| nach 14 Tagen / 20°C | 1,8 | 2,1 |
| nach 28 Tagen / 20°C | 3,0 | 3,8 |
| **Bruchdehnung (%)** | | |
| nach 14 Tagen / 20°C | 580 | 480 |
| nach 28 Tagen / 20°C | 720 | 630 |
| **Spannungswert bei 200% Dehnung (MPa)** | | |
| nach 14 Tagen / 20°C | 1,6 | 2,0 |
| nach 28 Tagen / 20°C | 2,0 | 2,7 |
| **Härte (Shore A)** | | |
| nach 14 Tagen / 20°C | 38 | 38 |
| nach 28 Tagen / 20°C | 43 | 46 |

Beispiel 1o

## Herstellung eines großvolumigen Polychloropren-Dichtungsprofils drucklose Vulkanisation bei angehobener Raumtemperatur

Mischungsherstellung in bekannter Weise.
(Rezeptur für CR-Schleusendichtung) Extrusion im Vakuumextruder.

| | |
|---|---|
| Polychloropren, nicht schwefelmodifiziert, geringe Kristallisationsneigung | 100 |
| Ruß N539 | 35 |
| Ruß N990 | 25 |
| aromatisches Mineralöl | 5 |
| Ozonschutzwachs | 2 |
| Stearinsäure | 0,5 |
| alkyliertes Diphenylamin | 2 |
| P-Phenylendiamin | 1 |
| Magnesiumoxid leicht angepastet | 4 |
| Zinkoxid | 5 |
| TMDHCH (FP ca. 70°C) | 2 |

Mooney-Anvulkanisationszeit 120°C MS5/min 11

Vulkanisateigenschaften am Normstab S3

| Vulkanisationsart: | A | B | C |
|---|---|---|---|
| Zugfestigkeit (MPa) | 18,4 | 11,0 | 14,2 |
| Bruchdehnung (%) | 235 | 590 | 180 |
| Spannungswert bei 200% Dehnung (MPa) | 16,5 | 4,1 | 15,5 |
| Mikrohärte (IRHD) *) | 67 | 44 | 71 |

A = 45 min/150°C in Dampf (=4 atü)
B = 5 Tage / 40°C im Wärmeschrank (drucklos)
C = 5 Tage / 70°C im Wärmeschrank (drucklos)

*) Anmerkung:
ISO 48-1975

Beispiel 11

Herstellung einer Dichtungsplatte aus Polychloropren in druckloser Vulkanisation bei Raumtemperatur und angehobener Raumtemperatur

Mischungsherstellung in bekannter Weise.

Kalandrieren in üblicher Weise auf einem 3-Walzenkalander.

| | |
|---|---|
| Polychloropren[1] | 50 |
| Polychloropren[2] | 50 |
| Ruß N 539 | 40 |
| Synthetischer Weichmacher[3] | 10 |
| Synthetischer Weichmacher[4] | 5 |
| Faktis | 10 |
| Magnesiumoxid leicht angepastet | 4 |
| Stearinsäure | 1 |
| Ozonschutzwachs | 2 |
| Ozon-u.Alterungsschutzmittel[5] | 2 |
| TMDHCH (FP ca. 70°C) | 2 |

Mooney-Anvulkanisationszeit 120°C (MS5/min) 15

Vulkanisateigenschaften am Normstab S2

| Vulkanisationsart: | A | B | C | D | E |
|---|---|---|---|---|---|
| Zugfestigkeit (MPa) | 11,3 | 11,8 | 5,5 | 10,0 | 11,6 |
| Bruchdehnung (%) | 425 | 400 | 790 | 700 | 690 |
| Spannungswert bei 3oo% Dehn. (MPa) | 7,8 | 8,7 | 2,4 | 4,6 | 5,0 |
| Mikrohärte (IRHD) | 42 | 50 | 37 | 39 | 40 |

A = 40 min bei 150°C in Heißluft mit 3 atü Druckluft
B = 40 min bei 150°C in Heißdampf (4 atü)
C = 28 Tage bei Raumtemperatur, drucklos
D = 14 Tage bei 40°C, drucklos
E = 2 Tage bei 70°C, drucklos

Anmerkungen:
1) nicht schwefelmodifiziert, geringe Kristallisation
2) nicht schwefelmodifiziert, mittlere Kristallisation, vorvernetzt
3) Ätherthioäther: Vulkanol OT
4) aromatischer Polyäther: Vulkanol FH
5) Benzofuran-Derivat: Vulkanox AFC

**Beispiel 12**

**Formgebung und Vorvulkanisation einer Polychloropren-Dichtungsplatte in einer hydraulischen Presse und Ausvulkanisation drucklos bei Raumtemperatur und angehobener Raumtemperatur**

**Rezeptur siehe Beispiel 11**

Mooney-Anvulkanisationszeit 120°C (MS5/min) 15

Vulkameter 170°C (40 min Laufzeit)

| | | | |
|---|---|---|---|
| Schubmodul-Minimum | (N) | 3,7 | |
| Schubmodul-Maximum | (N) | 35,0 | |
| $T_{10}$ | (min) | 2,1 | (ca.2) |
| $T_{50}$ | (min) | 5,8 | |
| $T_{80}$ | (min) | 13,8 | (ca.14) |
| $T_{90}$ | (min) | 18,3 | |

Vulkanisateigenschaften am Normstab S3

| Stufenheizung unter der hydraulischen Presse bei 170°C<br>2 mm-Platten, Heizzeit (min) | 2 | 4 | 14 |
|---|---|---|---|
| Zugfestigkeit (MPa) | 9,0 | 14,0 | 14,1 |
| Bruchdehnung (%) | 640 | 450 | 355 |
| Spannungswert bei 300% Dehnung (MPa) | 4,2 | 8,7 | 12,0 |
| Mikrohärte | 33 | 49 | 52 |

Lagerung der vorvulkanisierten Platte, Heizstufe 170°C/2 min

28 Tage bei Raumtemperatur

| | |
|---|---|
| Zugfestigkeit (MPa) | 9,9 |
| Bruchdehnung (%) | 520 |
| Spannungswert bei 300% Dehnung (MPa) | 5,0 |
| Mikrohärte (IRHD) | 46 |

14 Tage bei 40°C

| | |
|---|---|
| Zugfestigkeit (MPa) | 13,0 |
| Bruchdehnung (%) | 500 |
| Spannungswert bei 300% Dehnung (MPa) | 7,3 |
| Mikrohärte (IRHD) | 45 |

4 Tage bei 70°C

| | |
|---|---|
| Zugfestigkeit (MPa) | 14,8 |
| Bruchdehnung (%) | 430 |
| Spannungswert bei 300% Dehnung (MPa) | 10,3 |
| Mikrohärte (IRHD) | 48 |

Die Platten der 2 Minuten-Heizstufe sind auf dem Walzwerk bzw. Refiner replastizierbar.

Beispiel 13

Vernetzung von Polychloropren-Klebstofftyp mit TMDHCH

In bekannter Weise wurde ein Klebstoff mittels folgender Rezeptur hergestellt. Das TMDHCH (FP ca. 70°C) wurde zuvor mit 1 : 2 Gewichtsteilen in einem Weichmacher[1] vom Typ Alkylsulfonsäure-alkylphenylester gelöst. In üblicher Weise wurden Test-Gummisohlenplatten*) verklebt und nach bestimmten Lagerzeiten wurde bei 70°C die Trennfestigkeit bestimmt. Ferner wurde die Viskosität der Klebstoff-Lösung während der Lagerung bei 20°C verfolgt.

| | |
|---|---|
| Polychloropren, Klebstofftyp[2] | 50 |
| Polychloropren, Normaltyp[3] | 50 |
| Magnesiumoxid leicht | 4 |
| Zinkoxid | 4 |
| 2,6-Di-tert.-butyl-p-kresol[4] | 2 |

Auf 1 Kg Mischung 45 g Chlorkautschuk[5]

| | |
|---|---|
| Lösungsansatz: | 1 Teil Mischung<br>4 Teile Lösungsmittel-Gemisch |
| Lösungsmittel: | 2 Teile Äthylacetat<br>2 Teile Benzin<br>1 Teil Toluol |

Zusatz von:

| | |
|---|---|
| TMDHCH (FP ca. 7o° C) | 1o Gew. Teile / 1oo Kautschuk |
| Weichmacher (s.oben) | 2o " " / " " |

*) Anmerkung:

Nora-Gummi der Fa. Freudenberg
Härte (Shore A) ca. 92, Basis SBR

Beispiel 13 (Fortsetzung)

Trennkraft bei 70°C gemessen (also keine Kristallisation mehr)

| | | | |
|---|---|---|---|
| nach Lagerung bei 20°C/ (Selbstvernetzung) | 0 Tage | (N/30mm) | 1,0 *) |
| | 3 Tage | | 16,0 |
| | 7 Tage | | 26,0 |
| | 14 Tage | | 35,0 |
| nach Lagerung bei 40°C/ (Selbstvernetzung bei angehobener RT) | 0 Tage | (N/30mm) | 1,0 |
| | 2 Tage | | 47,0 |
| | 3 Tage | | 49,0 |
| | 7 Tage | | 50,0 |
| | 14 Tage | | 35,0 |
| nach Lagerung bei 70°C/ | 0 Tage | (N/30mm) | 1,0 |
| | 1 Tag | | 40,0 |
| | 2 Tage | | 24,0 |
| | 3 Tage | | 19,0 |
| | 7 Tage | | 20,0 |

Klebstofflösungs-Viskosität nach Lagerung bei 20°C

Gemessen mit Brookfield-Viskosimeter LVT, Spindel 4, 60 U/min.

| | | |
|---|---|---|
| 0 Tage | 2520 | m Pa/Sekunde |
| 5 Tage | 2360 | " |
| 20 Tage | 2550 | " |

Anmerkungen

1) Vulkanol SF, 2) Baypren 321, 3) Baypren 233,
4) Vulkanox KB, 5) Pergut S40,

*) Diese Trennkraft entspricht einem 0-Versuch, weil dieser Klebstoff als Zweikomponenten-Kleber im entkristallisierten Zustand keine nennenswerte Trennkraft zeigen kann (dem Fachmann bekannt).

Beispiel 14

Vernetzung von Polychloroprenlatex

Herstellung der Latexmischungen in bekannter Weise, wobei das TMDHCH (mit FP ca. 7o°C) mit 2o%igem Emulgatur*) 1:1 in einer Reibschale verrieben wurde. Zinkoxyd als 33%ige Paste wurde dem emulgierten/suspendierten TMDHCH zugesetzt und alles weiter verrieben. Es wurden auf Tonplatten Filme gegossen von ca. 1,5 mm Stärke.

| | A | B |
|---|---|---|
| Polychloropren-Latex (58%ig)**) | 173 | 173 ***) |
| Zinkoxid (33%ig) | - | 15 |
| TMDHCH (FP ca. 70°C) | - | 6 |
| Emulgator (20%ig) | - | 6 |

Filme bei 40°C gelagert, 6 Tage
(Selbstvulkanisation bei angehobener RT)

| | A | B |
|---|---|---|
| Quellung in ASTM-Öl 3 bei 70°C Gewichtszunahme nach 4 Tagen (%) | 142 | 76 |

Anmerkungen zu Beispiel 5

*) Emulvin **) Bayprenlatex MKB

***) Ein Versuch mit Zinkoxid allein erübrigte sich, weil jedem Fachmann bekannt ist, daß bei 4o°C in 6 Tagen keine nennenswerte Vernetzungsreaktion eintritt.

## Beispiel 15

**Vernetzung von Polychloropren mit TMDHCH in verschiedenen Oligomerisationsstufen.**

Mischungsherstellung in bekannter Weise

| | A | B | C | D |
|---|---|---|---|---|
| Polychloropren, nicht schwefelmod. | 100 | 100 | 100 | 100 |
| Stearinsäure | 0,5 | 0,5 | 0,5 | 0,5 |
| Magnesiumoxid leicht | 4 | 4 | 4 | 4 |
| alkyliertes Diphenylamin | 2 | 2 | 2 | 2 |
| Ruß N 762 | 30 | 30 | 30 | 30 |
| Zinkoxid | 5 | 5 | 5 | 5 |
| TMDHCH (FP > 70°C) | 2 | - | - | - |
| TMDHCH (FP ca. 70°C) | - | 2 | - | - |
| TMDHCH, flüssig* | - | - | 2 | - |
| TMDHCH monomer** | - | - | - | 2 |

**Mooney-Anvulkanisationszeit 120°C (MS5/min)**

| | A | B | C | D |
|---|---|---|---|---|
| nach Mischungsherstellung | 10 | 11 | 23 | 42 |
| nach 1 Tag / 70°C | 10 | anvulk. | 4 | 8 |
| nach 2 Tagen / 70°C | anvulk. | anvulk. | anvulk. | anvulk. |

**Vulkameter 170°C ( 40 min Laufzeit)**

| | | A | B | C | D |
|---|---|---|---|---|---|
| Schubmodul-Maximum | (N) | 24,8 | 36,3 | 24,3 | 23,9 |
| $T_{10}$ | (min) | 1,7 | 2,0 | 2,4 | 2,6 |
| $T_{50}$ | (min) | 3,4 | 3,4 | 4,1 | 4,2 |
| $T_{80}$ | (min) | 4,5 | 4,4 | 5,6 | 8,0 |
| $T_{90}$ | (min) | 5,1 | 5,3 | 11,2 | 16,6 |

**Defohärte bei 80°C (N)**

| | A | B | C | D |
|---|---|---|---|---|
| nach Mischungsherstellung | 7,8 | 8,4 | 7,7 | 7,7 |
| nach 1 Tag / 40°C | 10,1 | 10,5 | 7,8 | 7,4 |
| nach 2 Tagen / 40°C | 17,7 | 13,6 | 9,8 | 7,8 |
| nach 4 Tagen / 40°C | 31,4 | 29,4 | 12,3 | 7,8 |
| nach 7 Tagen / 40°C | 53,9 | 58,8 | 19,1 | 9,1 |
| nach 14 Tagen / 40°C | 147,1 | >200 | >200 | >200 |
| nach 1 Tag / 70°C | 63,7 | 78,5 | 25,0 | 11,0 |
| nach 2 Tagen / 70°C | >200 | >200 | >200 | 196,1 |
| nach 4 Tagen / 70°C | >200 | >200 | >200 | >200 |

*) Gemisch aus monomerem TMDHCH mit niedrig oligomerem TMDHCH

**) ca. 97% monomer, in Vakuum destilliert

**Beispiel 15 ( Fortsetzung)**

| Vulkanisateigenschaften am Normring I (170°C/10 min) | | | | |
|---|---|---|---|---|
| Zugfestigkeit (MPa) | 18,4 | 18,3 | 18,7 | 18,4 |
| Bruchdehnung (%) | 550 | 445 | 625 | 645 |
| Spannungswert bei 300% Dehnung (MPa) | 7,1 | 9,7 | 5,8 | 5,2 |
| Härte (Shore A) | 57 | 62 | 54 | 53 |
| Druckverformungsrest(%)70h/100°C | | | | |
| Heizstufe: 170°C/10' | 30 | 22 | 40 | 43 |
| 15' | 27 | 19 | 33 | 37 |
| 20' | 27 | 18 | 31 | 35 |

Beispiel 16

Vernetzung von Polychloropren ohne Metalloxide

| | A | B | C |
|---|---|---|---|
| Polychloropren nicht schwefelmodifiziert | 100 | 100 | 100 |
| Stearinsäure | 0,5 | 0,5 | 0,5 |
| Magnesiumoxid leicht | 4 | - | - |
| Zinkoxid | 5 | - | - |
| TMDECH (FP ca. 70°C) | 2 | 2 | 1 |

| Mooney-Viskosität ML4/100°C(ME) | | | |
|---|---|---|---|
| nach Mischungsherstellung | 49 | 49 | 45 |
| nach 1 Tag / 70°C | >200 | 183 | 140 |
| nach 2 Tagen / 70°C | >200 | >200 | 183 |
| nach 3 Tagen / 70°C | >200 | >200 | >200 |

Beispiel 17



Vernetzung von schwefelmodifiziertem Polychloropren

Herstellung von CR-Mischungen in bekannter Weise nach folgender Rezeptur in einem Labor-Innenmischer:

| | A | B | C | D | E |
|---|---|---|---|---|---|
| Polychloropren (schwefelmodifiziert) | 100 | 100 | 50 | - | - |
| Polychloropren (nicht schwefelmodifiziert) | - | - | 50 | 100 | 100 |
| Stearinsäure | 0,5 | o,5 | o,5 | o,5 | o,5 |
| Phenyl-β-naphthyl-amin | 2 | 2 | 2 | 2 | 2 |
| Ruß N 762 | 30 | 3o | 3o | 3o | 3o |
| Zinkoxyd aktiv | 5 | 5 | 5 | 5 | 5 |
| TMDHCH (FP ca. 70°C) | - | 2 | 2 | 2 | - |
| Ethylenthioharnstoff | - | - | - | - | 0,5 |
| MgO leicht | 4 | 4 | 4 | 4 | 4 |

Mooney-Anvulkanisationszeit 120°C

| | A | B | C | D | E |
|---|---|---|---|---|---|
| MS $t_5$ (min) | 20 | 10 | 10 | 11 | 10 |

Vulkameter 150°C (40 min Laufzeit)

| | | A | B | C | D | E |
|---|---|---|---|---|---|---|
| Schubmodul-Maximum | (N) | 34,0 | 39,0 | 36,0 | 30,0 | 30,0 |
| $t_{10}$ | (min) | 3,5 | 2,5 | 2,5 | 3,5 | 3,0 |
| $t_{50}$ | (min) | 5,5 | 3,5 | 4,0 | 6,0 | 8,0 |
| $t_{80}$ | (min) | 8,5 | 5,0 | 5,5 | 8,0 | 15,0 |
| $t_{90}$ | (min) | 21,0 | 7,0 | 7,5 | 9,0 | 21,0 |

Vulkameter 170°C (20 min Laufzeit)

| | | A | B | C | D | E |
|---|---|---|---|---|---|---|
| Schubmodul-Maximum | (N) | 35,0 | 37,0 | 33,0 | 25,0 | 26,0 |
| $t_{10}$ | (min) | 1,9 | 1,5 | 1,5 | 2,0 | 1,8 |
| $t_{50}$ | (min) | 2,4 | 2,0 | 2,1 | 2,8 | 3,5 |
| $t_{80}$ | (min) | 4,8 | 2,7 | 2,7 | 3,4 | 6,2 |
| $t_{90}$ | (min) | 9,0 | 7,0 | 4,1 | 3,7 | 9,0 |

Vulkanisateigenschaften Heizung 15o°C 2o' 3o' 45' (Mittelwerte)

| | A | B | C | D | E |
|---|---|---|---|---|---|
| Zugfestigkeit (MPa) | 16,0 | 17,8 | 15,5 | 17,5 | 18,4 |
| Bruchdehnung (%) | 620 | 510 | 495 | 525 | 505 |
| Spannungswert b. 3oo% Dehn. (MPa) | 7,1 | 9,1 | 8,0 | 7,5 | 8,3 |
| Härte (Shore A) | 61 | 64 | 61 | 59 | 60 |
| Rückprallelastizität (%) | 49 | 48 | 46 | 43 | 45 |

Beispiel 18

Mooney-Viskositäts-Stabilisierung von schwefelmodifiziertem Polychloropren durch TMDHCH und TMDHCH-6-äthoxy

Mischungsherstellung in bekannter Weise

| | | | | |
|---|---|---|---|---|
| A) Polychloropren schwefelmodifiziert | 100 | 100 | 100 | 100 |
| TMDHCH, monomer | - | 0,05 | 0,1 | 0,2 |
| Mooney-Viskosität (ML4/100°C (ME) | | | | |
| sofort nach Zusatz | 33 | 31 | 32 | 32 |
| nach 1 Tag / 70°C Lagerung | 30 | 31 | 32 | 33 |
| Mooney-Viskosität (ML10/100°C(ME) | | | | |
| sofort nach Zusatz | 29 | 27 | 28 | 28 |
| nach 1 Tag / 70°C Lagerung | 26 | 26 | 27 | 28 |

| | | | | |
|---|---|---|---|---|
| B) Polychloropren schwefelmodifiziert | 100 | 100 | 100 | 100 |
| TMDHCH-6-äthoxy monomer | - | 0,05 | 0,1 | 0,2 |
| Mooney-Viskosität (ML4/100°C (ME) | | | | |
| sofort nach Zusatz | 35 | 31 | 32 | 31 |
| nach 1 Tag / 70°C Lagerung | 32 | 32 | 32 | 32 |
| Mooney-Viskosität (ML10/100°C (ME) | | | | |
| sofort nach Zusatz | 30 | 28 | 28 | 28 |
| nach 1 Tag / 70°C Lagerung | 27 | 27 | 27 | 28 |

Beispiel 19

Vernetzung von Polychloropren mit TMDHCH (FP ca.70°C)

Dynamische Rißbildung und Rißwachstum.

| | | A | B | C | D | E |
|---|---|---|---|---|---|---|
| Polychloropren*) | | 100 | 100 | 100 | 100 | 100 |
| Magnesiumoxid leicht | | 4 | 4 | 4 | 4 | 4 |
| Stearinsäure | | 0,5 | o,5 | o,5 | o,5 | o,5 |
| Ruß N 762 | | 30 | 3o | 3o | 3o | 3o |
| Zinkoxyd aktiv | | 5 | 5 | 5 | 5 | 5 |
| alkyliertes Diphenylamin | | 2 | 2 | 2 | 2 | 2 |
| Ethylenthioharnstoff | | 0,5 | 1 | - | - | - |
| Diphenylthioharnstoff | | - | 1 | - | - | - |
| TMDHCH (FP ca.70°C) | | - | - | 1 | 1,5 | 2 |
| **Vulkameter 150°C (40 min Laufzeit)** | | | | | | |
| Schubmodul-Maximum | (N) | 28,6 | 38,9 | 29,5 | 31,2 | 33,9 |
| $T_{10}$ | (min) | 3,6 | 1,7 | 4,7 | 4,8 | 4,4 |
| $T_{80}$ | (min) | 18,5 | 11,4 | 12,5 | 12,4 | 10,8 |
| $T_{90}$ | (min) | 24,5 | 19,1 | 14,6 | 14,2 | 12,3 |
| $T_{90}-T_{80}$ | (min) | 6,0 | 7,7 | 2,1 | 1,8 | 1,5 |
| **Vulkameter 170°C (20 min Laufzeit)** | | | | | | |
| Schubmodul-Maximum | (N) | 32,2 | 39,9 | 27,6 | 29,5 | 31,3 |
| $T_{10}$ | (min) | 1,8 | 1,0 | 1,9 | 2,0 | 1,8 |
| $T_{80}$ | (min) | 7,8 | 5,0 | 5,0 | 5,0 | 4,2 |
| $T_{90}$ | (min) | 13,4 | 9,3 | 6,0 | 5,9 | 4,9 |
| $T_{90}-T_{80}$ | (min) | 5,6 | 4,3 | 1,0 | 0,9 | 0,7 |
| **De Mattia, Rißbildung (170°C/20 min)** | | | | | | |
| 20 % Risse | (Kc) | 140 | 11 | >500 | >400 | >420 |
| **De Mattia, Rißwachstum (170°C/20 min)** | | | | | | |
| von 2 auf 4 mm | (Kc) | 1,5 | 0,1 | 7,0 | 8,2 | 3,5 |

*) nicht schwefelmodifiziert

Beispiel 20



Kombination von TMDHCH (FP ca.70°C) mit Thioharnstoffen bei der Vernetzung von Polychloropren.
Mischungsherstellung in bekannter Weise

| | A | B | C | D |
|---|---|---|---|---|
| Polychloropren nicht schwefelmodifiziert | 100 | 100 | 100 | 100 |
| Magnesiumoxid leicht | 4 | 4 | 4 | 4 |
| alkyliertes Diphenylamin | 2 | 2 | 2 | 2 |
| Stearinsäure | 0,5 | o,5 | o,5 | o,5 |
| Ruß N 762 | 30 | 3o | 3o | 3o |
| Zinkoxid | 5 | 5 | 5 | 5 |
| TMDHCH (FP ca.70°C) | 2 | 2 | 2 | 2 |
| Ethylenthioharnstoff | - | 0,5 | - | - |
| Diphenylthioharnstoff | - | - | 1 | - |
| Diethylthioharnstoff | - | - | - | 1 |
| **Mooney-Anvulkanisationszeit** | | | | |
| MS5/120°C (min) | 12 | 9 | 7 | 5 |
| **Vulkameter 170°C (40 min Laufzeit)** | | | | |
| Schubmodul-Maximum (N) | 47,6 | 51,2 | 43,5 | 49,0 |
| $T_{10}$ (min) | 2,3 | 1,8 | 1,3 | 1,0 |
| $T_{80}$ (min) | 8,8 | 7,1 | 3,4 | 3,3 |
| **Defohärte/80°C (N)** | | | | |
| nach Mischungsherstellung | 8,8 | 8,8 | 8,8 | 8,8 |
| nach 1 Tag / 70°C | 50,0 | 61,3 | >200 | 161,8 |
| nach 2 Tagen / 70°C | >200 | >200 | >200 | >200 |

Beispiel 2o (Fortsetzung)

Vulkanisateigenschaften am Normring I (170°C/10 min)

| | | | | |
|---|---|---|---|---|
| Zugfestigkeit (MPa) | 17,7 | 16,9 | 17,2 | 15,4 |
| Bruchdehnung (%) | 420 | 355 | 400 | 305 |
| Spannungswert bei 300% Dehnung (MPa) | 10,7 | 13,3 | 11,0 | 14,6 |
| Härte (Shore A) | 63 | 64 | 62 | 66 |
| Compression set 70h/100°C (%) (20'Hzg.) | 31 | 24 | 22 | 18 |

## Beispiel 21

**Kombination von TMDHCH (FP ca. 70°C) mit Schwefel und Guanidin/ Thiuram-System bei der Vernetzung von Polychloropren.**

Mischungsherstellung in bekannter Weise

| | A | B | C |
|---|---|---|---|
| Polychloropren, nicht schwefelmodifiziert | 100 | 100 | 100 |
| Magnesiumoxid leicht | 4 | 4 | 4 |
| alkyliertes Diphenylamin | 2 | 2 | 2 |
| Stearinsäure | 0,5 | o,5 | o,5 |
| Ruß N 762 | 30 | 3o | 3o |
| Zinkoxid | 5 | 5 | 5 |
| TMDHCH (FP ca. 70°C) | 2 | 2 | 2 |
| Schwefel | - | 0,5 | 0,5 |
| o-Tolylbiguanid | - | - | 1 |
| Tetramethylthiurammonosulfid | - | - | 1 |
| **Mooney-Anvulkanisationszeit 120°C (MS5/min)** | | | |
| nach Mischungsherstellung | 12 | 11 | 11 |
| **Vulkameter 170°C (40 min Laufzeit)** | | | |
| Schubmodul-Maximum (N) | 45,6 | 54,5 | 43,6 |
| $T_{10}$ (min) | 2,4 | 2,5 | 2,6 |
| $T_{80}$ (min) | 9,2 | 11,7 | 7,2 |
| **Defohärte bei 80°C (N)** | | | |
| nach Mischungsherstellung | 8,1 | 8,3 | 7,6 |
| nach 1 Tag / 70°C | 54,9 | 57,8 | 46,1 |
| nach 2 Tagen / 70°C | >200 | >200 | 157,9 |
| nach 4 Tagen / 70°C | >200 | >200 | >200 |
| **Vulkanisateigenschaften am Normring I (170°C/15 min)** | | | |
| Zugfestigkeit (MPa) | 17,6 | 17,4 | 16,5 |
| Bruchdehnung (%) | 410 | 410 | 425 |
| Spannungswert bei 300% Dehnung (MPa) | 10,8 | 11,0 | 9,6 |
| Härte (Shore A) | 62 | 64 | 62 |
| **Druckverformungsrest (%) nach 70h/100°C** | | | |
| Heizstufe: 170°C/20 min | 26 | 31 | 33 |

**Beispiel 22**

**Kombination von TMDHCH (FP ca. 7o°C) mit üblichen Beschleunigern wie z.B. Tetramethylthiuramdisulfid, Hexamethylentetramin und Zink-N-äthylphenyldithiocarbamat**

Grundrezeptur und Mischungsherstellung wie bei den Beispielen 2o und 21.

| | A | B | C | D |
|---|---|---|---|---|
| TMDHCH (FP ca. 70°C) | 2 | 2 | 2 | 2 |
| Tetramethylthiuramdisulfid | - | 1 | - | - |
| Hexamethylentetramin | - | - | 1 | - |
| Zink-N-äthylphenyldithiocarbamat | - | - | - | 1 |
| **Mooney-Anvulkanisationszeit 120°C MS5 (min)** | | | | |
| nach Mischungsherstellung | 13 | 12 | 9 | 8 |
| **Vulkameter 170°C (40 min Laufzeit)** | | | | |
| Schubmodul-Maximum (N) | 46,8 | 35,6 | 46,3 | 37,3 |
| $T_{10}$ (min) | 2,7 | 2,0 | 2,1 | 1,6 |
| $T_{80}$ (min) | 11,4 | 7,9 | 8,4 | 5,1 |
| **Defohärte bei 80°C (N)** | | | | |
| nach Mischungsherstellung | 8,3 | 7,4 | 8,3 | 7,6 |
| nach 1 Tag / 70°C | 56,8 | 100,6 | 112,8 | >200 |
| nach 2 Tagen / 70°C | 154,0 | >200 | 176,5 | >200 |
| nach 4 Tagen / 70°C | >200 | >200 | >200 | >200 |
| **Defoelastizität bei 80°C (%)** | | | | |
| (60% entspricht voller Vernetzung) | | | | |
| nach Mischungsherstellung | 26 | 21 | 25 | 24 |
| nach 1 Tag / 70°C | 57 | 60 | 60 | - |
| nach 2 Tagen / 70°C | 59 | - | 60 | - |
| nach 4 Tagen / 70°C | - | - | - | - |

(Bei Defohärte >2oo, Defoelastizität nicht mehr meßbar, die Probe ist bereits vulkanisiert)

**Beispiel 23**

**Vernetzung von Polychloropren mittels TMDHCH (FP ca. 70°C), Kaolin als Füllstoff.**

Mischungsherstellung in bekannter Weise

| | A | B | C |
|---|---|---|---|
| Polychloropren, nicht schwefelmodifiziert | 100 | 100 | 100 |
| Magnesiumoxid leicht | 4 | 4 | 4 |
| Stearinsäure | 0,5 | 0,5 | 0,5 |
| Kaolin hart*) | 80 | 80 | 80 |
| aromatisches Mineralöl | 10 | 10 | 10 |
| alkyliertes Diphenylamin | 2 | 2 | 2 |
| Ethylenthioharnstoff | 1,5 | - | - |
| TMDHCH (FP ca. 70°C) | - | 2 | - |
| Tetramethylthiurammonosulfid | - | - | 1 |
| o-Tolylbiguanid | - | - | 1 |
| Schwefel | - | - | 0,5 |
| Zinkoxid | 5 | 5 | 5 |

| | | A | B | C |
|---|---|---|---|---|
| **Mooney-Anvulkanisationszeit 120°C** | | | | |
| MS5 | (min) | 9,8 | 12,0 | 43,0 |
| **Vulkameter 150°C (40 min Laufzeit)** | | | | |
| Schubmodul-Maximum | (N) | 42,4 | 39,5 | 31,2 |
| $T_{10}$ | (min) | 2,7 | 3,5 | 6,4 |
| $T_{80}$ | (min) | 15,2 | 24,7 | 25,4 |

Anmerkung: *) verwendet wurde Dixie Clay

Patentansprüche

1. Verfahren zur Vernetzung von Polymeren mit aktivem Halogen durch Zugabe von Vernetzungsmitteln, dadurch gekennzeichnet, daß als Vernetzungsmittel Verbindungen der Formeln

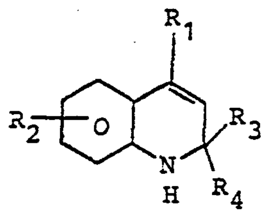 , oder dessen Oligomere

(1)

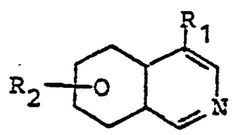 ,

(2)

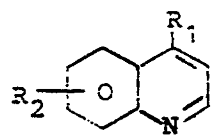

(2 a)

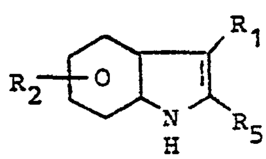 ,

(3)

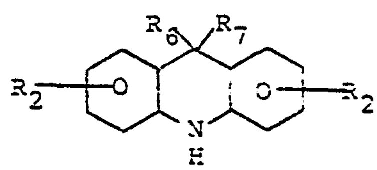 ,

(4)

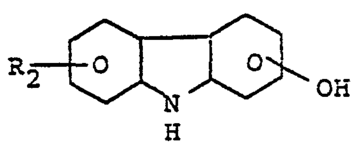 ,

(5)

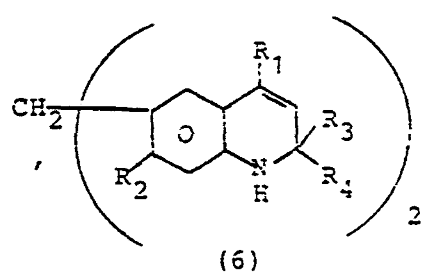 ,

(6)

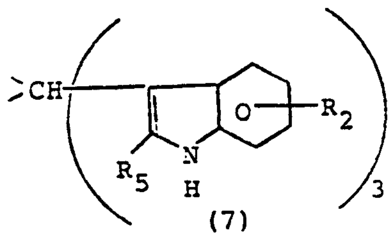
(7) ,
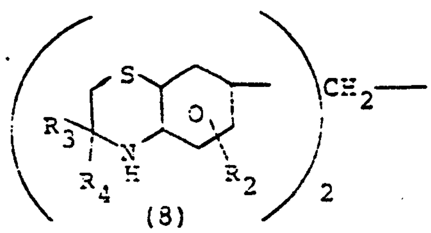
(8)

in denen

$R_1$ Wasserstoff, $C_1 - C_4$ Alkyl

$R_2$ Wasserstoff, $C_1 - C_{14}$ Alkyl, $C_1 - C_{14}$ Alkoxy, $C_1 - C_{14}$ Alkyl-phenyl, Phenyl, Naphthyl, Hydroxyl, $C_1 - C_{14}$ Alkylhydroxyl

$R_3$ und $R_4$ gleich oder verschieden Wasserstoff, $C_1 - C_4$ Alkyl

$R_5$ Wasserstoff, $C_1 - C_4$ Alkyl

$R_6$ und $R_7$ gleich oder verschieden Wasserstoff, $C_1 - C_4$ Alkyl

bedeuten,
eingesetzt werden und die Vernetzung in üblicher Weise durchgeführt wird.

2) Verfahren nach Anspruch 1, dadurch gekennzeichnet, daß das Vernetzungsmittel in Mengen von 0,1 bis 15 Gew.-Teilen pro 100 Gew.-Teile Festkautschuk eingesetzt wird.

3) Verfahren nach Ansprüchen 1 und 2, dadurch gekennzeichnet, daß das Vernetzungsmittel in Mengen von 0,3 bis 3 Gew.-Teilen pro 100 Gew.-Teile Festkautschuk eingesetzt wird.

4) Verfahren nach Ansprüchen 1 bis 3, dadurch gekennzeichnet, daß man die Vernetzung bei einer Temperatur von 5 bis 27o°C durchführt.

5) Verfahren nach Ansprüchen 1 bis 4, dadurch gekennzeichnet, daß man die Vernetzung bei einer Temperatur von 4o bis 200°C durchführt.

6) Vernetztes Polychloropren, hergestellt nach einem Verfahren der Ansprüche 1 bis 5.

0008019

Europäisches Patentamt

# EUROPÄISCHER RECHERCHENBERICHT

Nummer der Anmeldung
EP 79 10 2471

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | GB - A - 1 010 247 (GOODYEAR)<br>* Anspruch 5; Seite 4, Zeile 27 *<br>-- | 1-6 | C 08 L 11/00<br>21/00<br>C 08 K 5/34<br>5/46 |
| X | US - A - 3 314 926 (G. KRAUS et al.)<br>* Anspruch 1; Spalte 1, Zeile 59 *<br>---- | 1-6 | |

RECHERCHIERTE SACHGEBIETE (Int. Cl. 3)

C 08 L 11/00
15/02
21/00
23/28
C 08 K 5/34
5/46

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 31-10-1979 | V. HUMBEECK |